Europäisches Patentamt

European Patent Office

Office européen des brevets

(19)

(11) Publication number: **0 316 850 B1**

(12) EUROPEAN PATENT SPECIFICATION

(45) Date of publication of patent specification: **22.04.92**  (51) Int. Cl.⁵: **B65B 9/02**, B29C 67/22

(21) Application number: **88118971.6**

(22) Date of filing: **14.11.88**

(54) Apparatus and method for forming foam cushions for packaging purposes.

(30) Priority: **16.11.87 US 121223**
       **22.08.88 US 235013**

(43) Date of publication of application:
       **24.05.89 Bulletin 89/21**

(45) Publication of the grant of the patent:
       **22.04.92 Bulletin 92/17**

(84) Designated Contracting States:
       **AT BE CH DE ES FR GB GR IT LI LU NL SE**

(56) References cited:
       **EP-A- 0 225 976**
       **DE-A- 2 649 987**
       **GB-A- 2 013 619**
       **US-A- 2 420 983**

(73) Proprietor: **Sealed Air Corporation**
       **Park 80 Plaza East**
       **Saddle Brook New Jersey 07662(US)**

(72) Inventor: **Sperry, Charles Richard**
       **113 Clinton Street**
       **Springfield Vermont 05156(US)**
       Inventor: **Pinarer, Talat I.**
       **41 Balance Rock Road Bldg. 41, Unit 6**
       **Seymour Connecticut 06483(US)**
       Inventor: **Gavronsky, German**
       **97 Vine Road**
       **Stamford Connecticut 06905(US)**

(74) Representative: **Lieck, Hans-Peter, Dipl.-Ing.**
       **Feddersen Laule Scherzberg Undritz Widen-**
       **mayerstrasse 36**
       **W-8000 München 22(DE)**

## Description

Field of the Invention

The present invention relates to a method of and apparatus for the formation of foam-in-place packaging cushions according to the preambles of claims 1 and 9 (US-A-4 674 268).

Background of the Invention

Forming protective packaging for various articles of different sizes and shapes is a common problem in the packaging industry. In many circumstances, various articles of different sizes and shapes have to be packaged within generally square or rectangular packing cartons for handling and shipment. When the size and shape of the article to be packaged varies from such rectangular or square shapes, a typical solution is to include some sort of cushioning material to fill up the otherwise empty space represented by the difference in shape of the article and that of the container.

In one such prior packaging method, the cushioning material comprises a loose, friable material which is poured into the package to completely surround the articles. In another method, the articles are wrapped in sheets of cushioning material. Still another method currently in use involves foam-in-place packings, wherein a package which comprises a plastic bag containing a foamable composition is placed in the carton so as to surround the product. The foam thereafter expands in the bag and hardens. Foamable compositions of this type are well known in the art, and they are also referred to as foaming agents or foam precursors. Generally these materials are a combination of polymeric materials and either gases or gas-generating compounds. When properly mixed and distributed, gases permeate the polymeric materials, forming the resulting foam.

U.S. Patent No. 4,674,268 to Gavronsky et al, and which is commonly owned with the present invention, discloses an apparatus for automating the fabrication of foam filled bags of the above described type. In particular, the apparatus disclosed in this prior patent advances a supply of plastic tubing, transversely heat seals the tubing to form individual bags, forms slits across each bag, opens the bags at the slits, and then inserts and injection cartridge laterally into the slits for filling each bag with the desired foamable composition. Also, the seal across the top of each bag may have interruptions, to permit the gas generated during foam formation to escape without disturbing the integrity of the bag.

While the Gavronsky et al apparatus represents a significant improvement over the prior essentially manual bag forming procedures, certain disadvantages remain. In particular, the requirement that the apparatus slit the plastic tubing, then open the bag, and then laterally insert a nozzle and inject the foamable composition into the bag necessitates a rather complicated mechanical system. Also, it is difficult to insure that all of the foamable composition enters the bag, and spillage is a common problem.

It is accordingly an object of the present invention to provide a method and apparatus for forming foam cushions of the described type, and which avoids the above noted disadvantages of the prior art systems.

It is a more specific object of the present invention to provide a method and apparatus for successively forming foam cushions, and which simultaneously fills and fabricates the bags from a pair of webs of plastic film, and which substantially eliminates spillage of the foamable composition.

It is also an object of the present invention to provide an apparatus for forming foam cushions and which is of relatively simple structural design, and which is able to provide gas ventilation openings in each bag by a simple procedure.

It is a further object of the present invention to provide a method and apparatus for forming foam cushions which is easily adapted for use in a totally mechanized operation for packaging one or more articles in a container.

These and other objects and advantages of the present invention are achieved in the embodiments illustrated herein, by the provision of a method and apparatus which includes advancing a pair of webs of plastic film along predetermined paths of travel from respective supply sources, and including guiding the advancing webs into opposing face-to-face contact at a first heat sealing station. At the heat sealing station, the opposing longitudinal side edges of the advancing webs are heat sealed to each other. Periodically, a predetermined amount of a foamable composition is introduced between the pair of webs of plastic film, and so as to be deposited in each bag being formed. Also, the heat sealing of the pair of webs is periodically and momentarily interrupted along at least one of the side edges during the advance of the webs through the first heat sealing station, so as to form at least one unsealed side edge opening for each bag. Finally, the advancing webs are advanced to a second heat sealing station and transversely heat sealed upstream of the unsealed side edge portions, to form a sealed top edge for each successive bag of foamable composition and including severing each bag from the next succeeding bag while forming a sealed bottom edge for the next succeeding bag.

The advance of the pair of webs from the respective supply sources includes advancing the webs in an opposing and converging relationship, and the predetermined amount of foamable composition is introduced from a discharge location which is between the converging webs and in close proximity to the point at which the webs initially contact each other. By this arrangement, the converging webs serve to funnel the foamable composition into the resulting bag to thereby minimize splashing and spillage.

## Brief Description of the Drawings

Some of the objects and advantages of the present invention having been stated, others will appear as the description proceeds, when taken in conjunction with the accompanying drawings, in which

Figure 1 is a schematic perspective view of a portion of a packaging production line which embodies the features of the present invention;

Figure 2 is a partly sectioned and schematic side elevation view of the drive roll means and the first and second heat sealing means of the invention;

Figure 3 is a fragmentary plan view of the advancing means shown in Figure 2;

Figure 4 is a view similar to Figure 3 and illustrating the first and second heating means of the apparatus;

Figure 5 is a sectioned side elevation view of the drive roll means and heating means as shown in Figure 2;

Figures 6-8 are views similar to Figure 5, and showing the heating means respectively in a first operative position, a second non operative position, and a third position wherein the transverse heating means is operative;

Figure 9 is a perspective view of the web advancing and heat sealing means of the invention;

Figure 10 is a perspective view of a foam filled bag produced in accordance with the present invention;

Figure 11 is a sectional view illustrating a closed container and supported article, and which includes a pair of foam filled packaging cushions produced in accordance with the present invention;

Figure 12 is a partly sectioned and schematic side elevation view of a second embodiment of the invention; and

Figure 13 is a fragmentary plan view of the advancing means of the embodiment shown in Figure 12.

## Detailed Description of the Preferred Embodiments

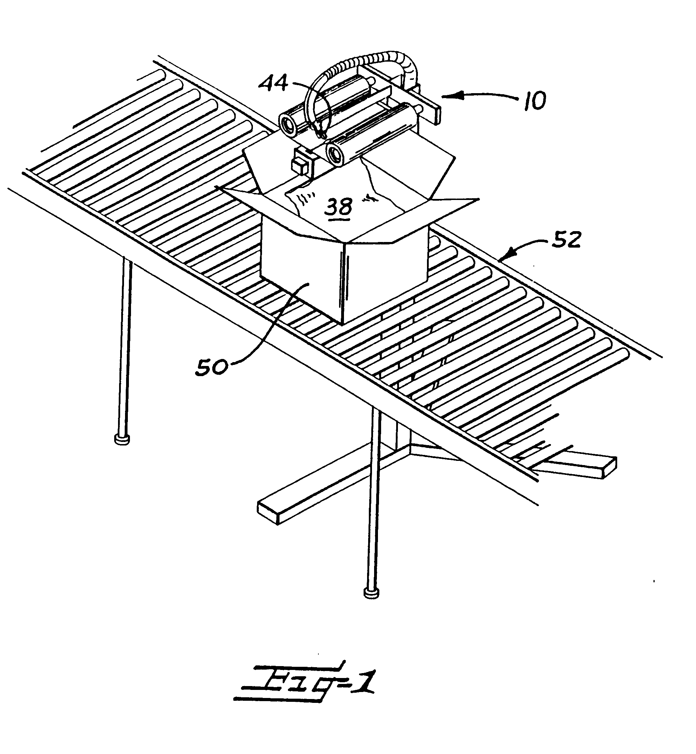

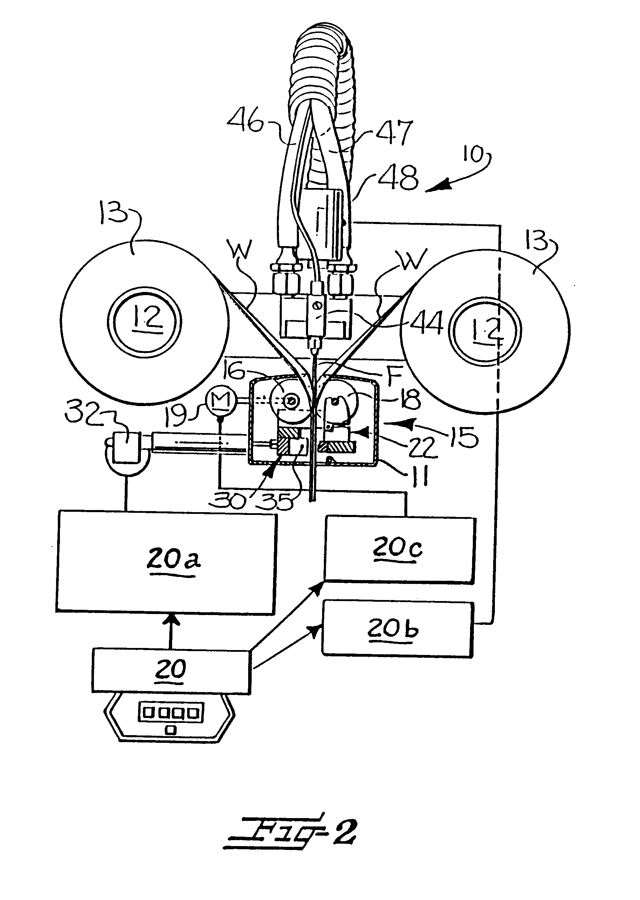

Referring more particularly to the drawings, Figures 2-9 illustrate a first embodiment of an apparatus for successively forming foam cushions in accordance with the present invention. In the illustrated embodiment, the apparatus is generally indicated at 10, and it comprises a frame which mounts a housing 11 and a pair of horizontally directed and laterally spaced apart spindles 12 for rotatably supporting a pair of supply rolls 13 of a suitable plastic web W. Typically, the plastic webs W may be between about 12 and 18 inches in width, and the webs may comprise a single ply high density polyethylene having a thickness of about 0.75 mils.

The webs W are advanced from the supply rolls 13 by drive roll means 15 which define a nip for receiving the webs therebetween, and for guiding the advancing webs downwardly in a converging relationship and into opposing face-to-face contact at the nip. The drive roll means 15 comprises a first pair of coaxially aligned drive rollers 16, 16′ mounted for rotation about a first horizontal axis on one side of the nip, and a second pair of coaxially aligned idler rollers 18, 18′ mounted for rotation about a second horizontal axis which is parallel to the first axis and is located on the other side of the nip. Each of the rollers of each pair is aligned across the nip with a roller of the other pair. The pair of drive rollers 16, 16′ are preferably fabricated from a rubber-like material, and they are rotated by a motor 19, which is in turn controlled by the program controller 20 as schematically illustrated in Figure 2.

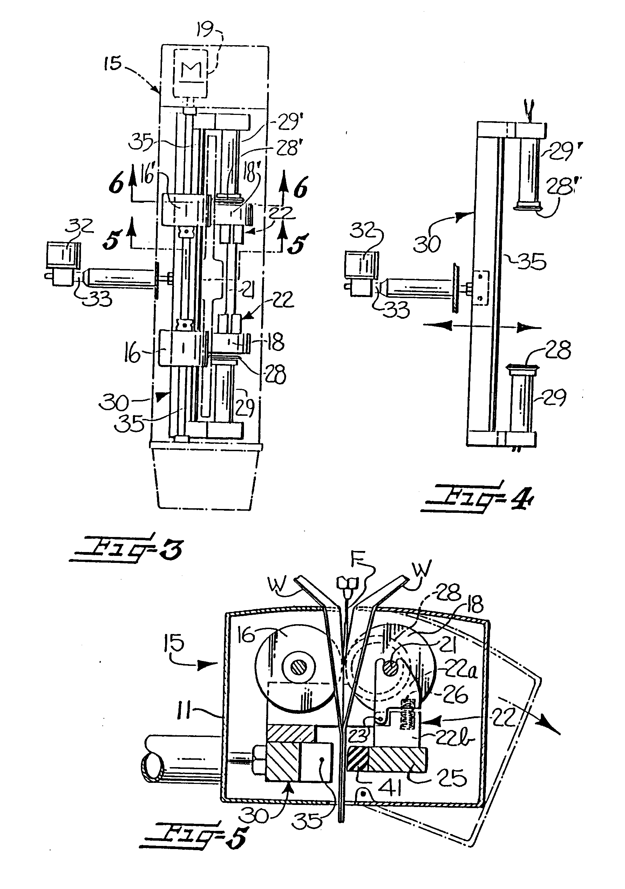

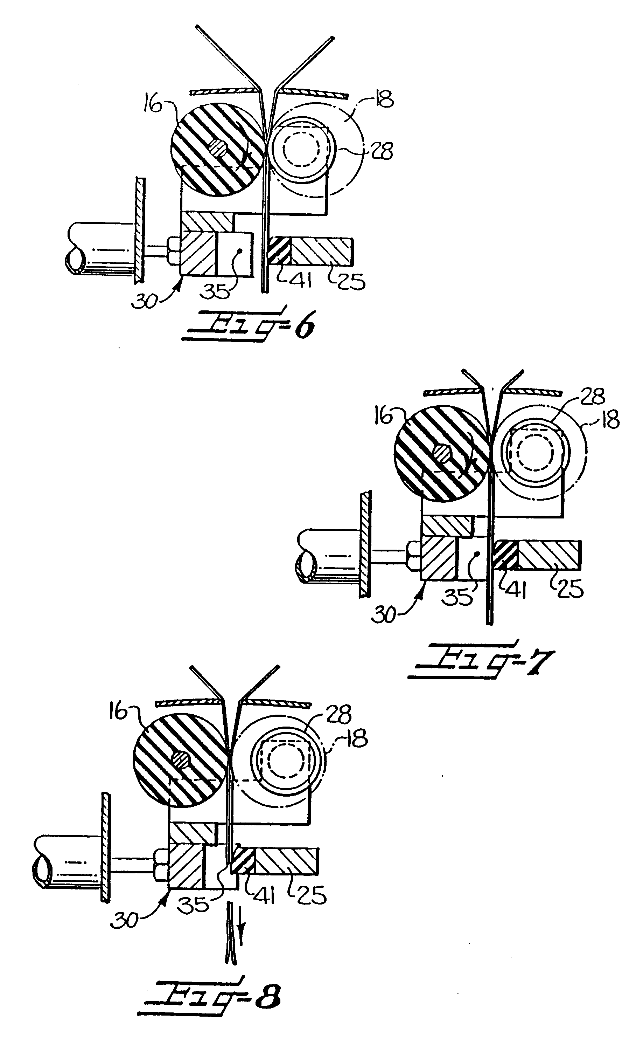

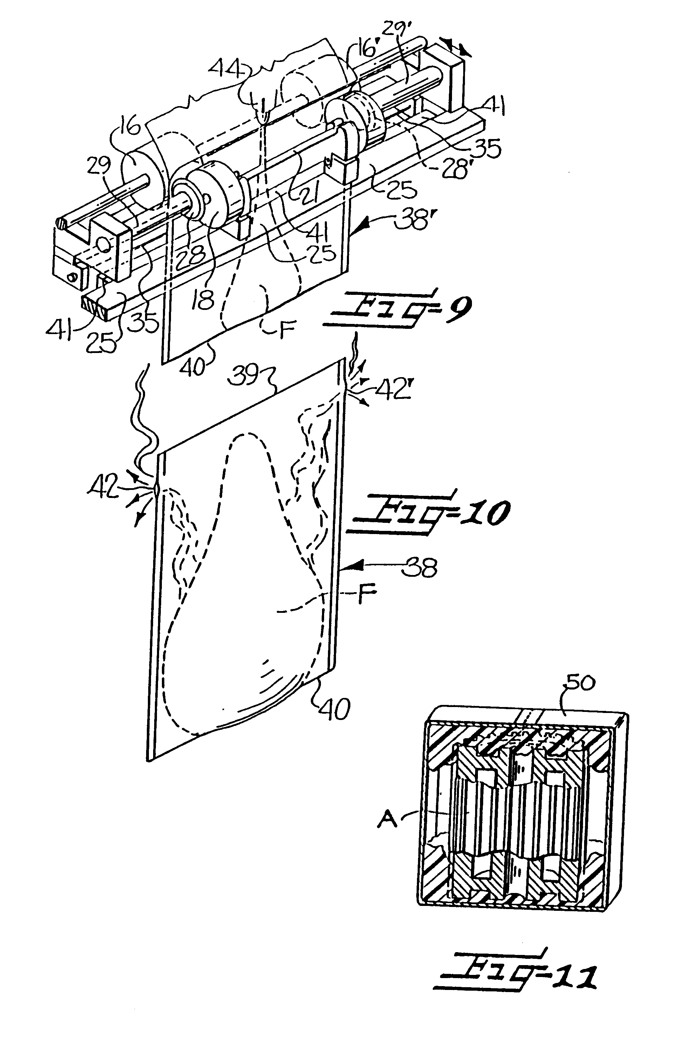

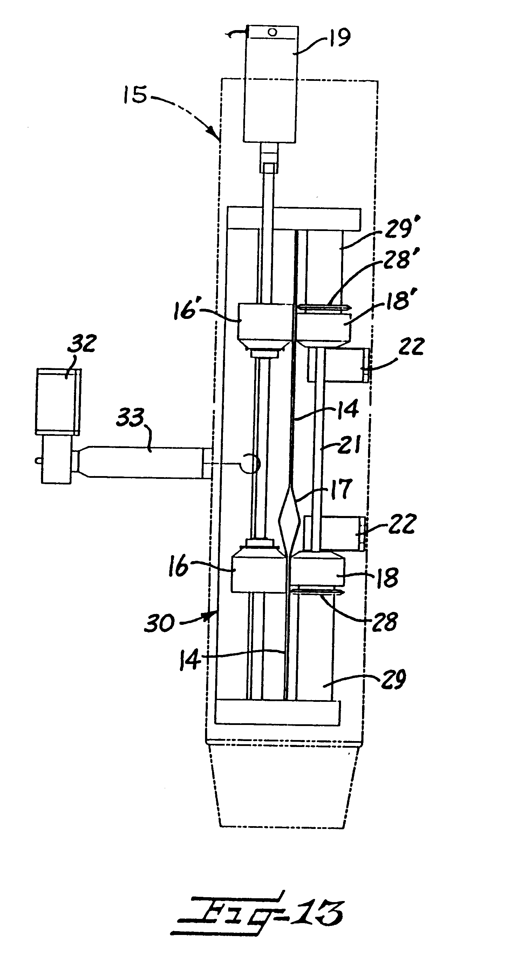

The pair of idler rollers 18, 18′ of the drive roll means are preferably fabricated from metal having a knurled surface, and they are mounted on an axle 21 which in turn is supported by a pair of posts 22 as best seen in Figures 5 and 9. Each post 22 is composed of two components 22a, 22b which are pivotal relative to each other about the pivotal axis 23, and the lower component 22b is fixedly mounted to a fixed frame member 25. Also, a spring 26 is positioned between the two components 22a, 22b to bias the idler rollers 18, 18′ toward the drive rollers 16, 16′ across the nip. Thus the two pairs of rollers securely engage and advance the plastic webs through the nip upon actuation of the drive motor 19.

A first heat sealing means is positioned along the path of travel and immediately adjacent the drive roll means for heat sealing the longitudinal side edges of the advancing plastic webs while they are in opposing face-to-face contact. This first heat sealing means comprises a pair of electrically heated rolls 28, 28′ positioned adjacent the nip, and as best seen in Figure 4, the heated rolls 28, 28′ are rotatably mounted at the ends of coaxial shafts 29, 29′, which are in turn mounted to a slidable carriage 30. The coaxial shafts 29, 29′ are laterally adjustable so that the respective positions of the heated rolls 28, 28′ can in turn be adjusted to seal bags of different widths without excessive waste along the sealed edges of the bag. Also, the heated rolls 28, 28′ are laterally positioned so as to be aligned across the nip with respective ones of the drive rollers 16, 16′, and so that the drive rollers serve as back-up rollers for the heated rolls 28, 28′.

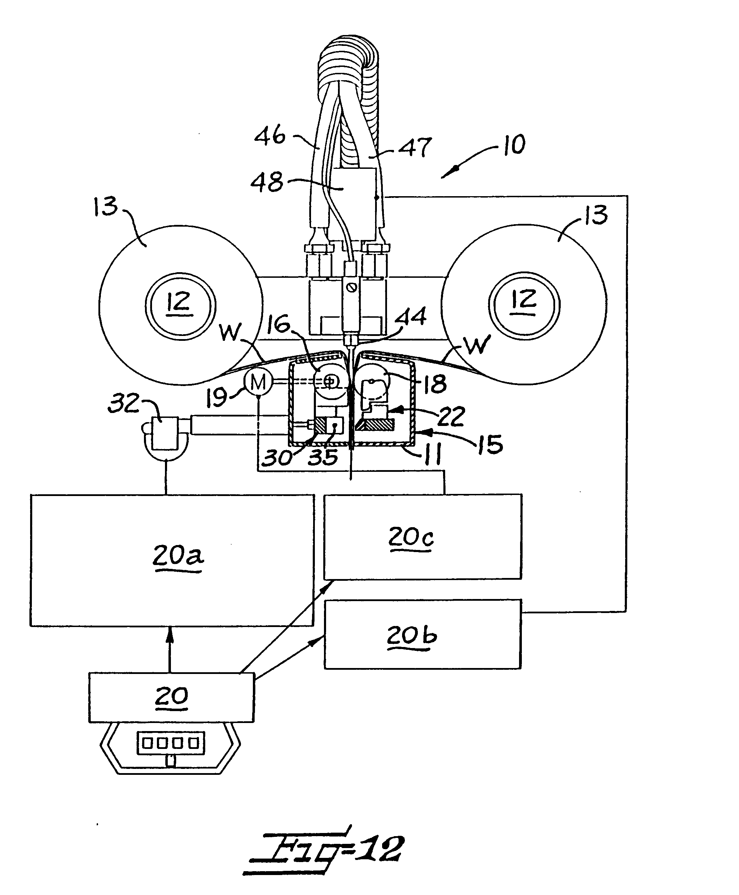

The carriage 30 is mounted to the frame of the apparatus 10 for movement between a first operative position as seen in Figure 6, and wherein the heated rolls 28, 28′ are positioned to engage the side edges of the advancing webs W and effect sealing, and a second position, as shown in Figure 7 wherein the heated rolls are laterally spaced from the advancing webs. The slidable movement of the carriage is effected by a small reversible motor 32, which is operatively connected to a lead screw 33 which is connected to the carriage.

The carriage 30 also mounts a second heat sealing means which is positioned along the path of travel of the webs for heat sealing the webs together in the transverse direction. More particularly, the second heat sealing means comprises an electrically heated wire 35 which is mounted on the carriage so as to extend in the transverse direction. Also, the carriage 30 is adapted to be moved by the motor 32 to a third position as shown in Figure 8, wherein the heated rolls 28, 28′ are laterally spaced further from the webs than in the second position, and wherein the heated wire 35 engages the webs. By appropriate design of the program controller 20, the advance of the webs is preferably terminated when the carriage 30 moves to its third position, and so that the heated wire 35 engages the webs while the webs are stationary. As a result, the heated wire severs the formed bag or cushion 38 (Figure 10) from the next succeeding bag 38′ - (Figure 9) so that the formed bag drops downwardly. Concurrently, the wire 35 also forms a sealed top edge 39 of the formed bag 38 along the lower side of the severance line, while also forming a sealed bottom edge 40 of the next succeeding bag along the upper side of the severance line. Preferably, a rubber pad 41 extends along the adjacent edge of the frame member 25 as seen in Figures 6-8 for holding the webs in engagement with the wire when the carriage is advanced to the third position.

As best seen in Figure 2, the operation of the reversible motor 32 and thus the lateral movement of the carriage 30 is controlled by the program controller 20. Figure 2 illustrates that the program controller 20 operates through a control 20a for the longitudinal sealing means and the transverse sealing means, a foam control 20b, and a web feed control 20c. By design, the program controller actuates the motor 32 so that the carriage 30 periodically and momentarily moves from the first oprative position to the second position during the advance of the webs and while each successive bag has passed substantially completely through the nip. As a result, each side edge of each bag includes a non-sealed ventilation opening 42, 42′ adjacent the eventual top edge 39, to thereby allow gas generated during foam formation to escape from within the bag, note Figure 10. In a preferred embodiment, the openings 42, 42′ extend for about one inch and they are positioned about one inch from the eventual top edge of the bag.

The apparatus 10 of the present invention further comprises means for periodically introducing a predetermined amount of foamable composition F between the opposing webs at a location upstream of the location at which the two webs are guided into the nip, and so that the foamable composition is deposited in each bag being formed and as the webs are being advanced and sealed along the longitudinal side edges. The means for thus depositing the foamable composition comprises a nozzle 44 and pair of hoses 46, 47 which are mounted on a suitable frame immediately above the nip, with the hoses leading from a suitable source of the chemicals to the nozzle. Also, a conventional valve 48 is provided for selectively opening and closing the nozzle in accordance with the signals from the program controller 20. The nozzle 44 is located between the converging portions of the webs and in close proximity to the nip where the webs initially contact each other, so that the converging webs serve to funnel the composition F into the bag being formed to thereby minimize splashing and spillage.

To now describe the sequence of operations in more detail, the webs W of plastic are initially guided into and through the nip manually, with the idler rollers 18, 18′ being movable laterally against the force of the springs 26 to facilitate their insertion. Upon release, springs 26 move the idler rolls laterally to engage the drive rollers and grip the webs therebetween. The apparatus is then started, which results in the drive rollers being rotated, to advance the webs through the nip. Concurrently, the heated rolls 28, 28′ engage the opposing longitudinal side edges of the advancing webs to heat seal the side edges together. At a predetermined time as determined by the program controller 20, the nozzle 44 of the foam supply is opened, causing a predetermined amount of the foamable composition F to be introduced between the advancing pair of webs and while they are converging toward each other in the manner best seen in Figure 2. The deposited composition passes downwardly through the nip, i.e. through the open space between the pairs of rollers 16, 16′ and 18, 18′, and is thus deposited in the bag being formed. The amount of the composition F which is deposited is determined by the size of the bag which the apparatus has been programmed to produce, which is typically about 18 inches in length and width.

The program controller 20 also acts to periodically and momentarily interrupt the heat sealing along the side edges, by actuating the motor 32 to laterally shift the carriage 30 from the operative position to the second position as shown in Figure 7, and then back to the operative position. This jogging of the carriage is timed so that the heated rolls 28, 28′ are separated from the webs at a location closely adjacent the resulting top edge 34 of the bag, as seen in Figure 10, to thereby form the ventilating openings 42, 42′, which permit escape of gas generated during foam formation. Next, the program controller 20 signals the motor 32 to move the carriage to the third or sealing position as shown in Figure 8, and concurrently, to disengage the motor 19 and thus terminate the advance of the webs. As noted above, this results in the electrically heated wire 35 engaging the stationary webs, to sever the formed bag 38 from the next succeeding bag, while also forming a sealed top edge 39 for the formed bag and a sealed bottom edge 40 for the next succeeding bag. It will also be noted that during this severing operation, the heated rolls 28, 28′ are separated from the side edges of the webs so as to not overly heat the side edges while the webs are stationary. After a predetermined time delay, the carriage 30 is returned to the operative position and the drive motor 19 is engaged, and the above cycle is repeated to form another foam filled bag.

Figures 12 and 13 illustrate a second embodiment of the invention which offers some advantages different from those of the previously described embodiment. For the sake of convenience, the particular parts are numbered identically in Figure 12 and 13 as they are in Figures 2 and 3 as far as is applicable.

Figure 12 illustrates that as an alternative to directing the webs W downwardly as in the first embodiment, the webs W may be advanced along a predetermined substantially horizontal path in a converging relationship and into opposing face to face contact at the nip. This is accomplished by changing the orientation of the supply rolls 13 on the spindles 12 so that the webs W of plastic transverse from the bottom of the supply roll 13 rather than from the top as in Figure 2. In this manner, the nozzle mechanism 44 may be positioned more closely to the nip formed by the advancing webs than is the case in the previous embodiment. This reduces splashing of foam under circumstances where this becomes important.

Figure 13 shows an alternative embodiment of the housing 11. In this embodiment, the longitudinal opening 14 includes means for guiding the webs W into the housing 11 while forming a mouth between the webs into which the foamable composition may be directed. In the illustrated embodiment, these means comprise widened portion 17 of the opening 14 which has a parallelogram configuration with the acute angles of the parallelogram lying along the longitudinal dimension of the opening 14. With the widened portion 17 thus configured, the webs W always pass over an edge in the opening 14 which has no less than an obtuse angle, and the webs thereby pass more smoothly over the edges and into the housing 11.

Furthermore, and as is also best illustrated in Figures 1 and 13, the widened portion 17 and the nozzle 44 are positioned longitudinally away from the center of the opening 14 in a direction towards the non-perpendicular angle set forth above. In this manner, the mouth formed by the webs is likewise positioned away from the center of the opening 14 so that foamable composition may be directed into one side of the bag being formed and any of the foamable composition directed from the nozzle 44 that splashes upon entering the bag will tend to splash within the bag and towards the other side of the bag rather than out of the bag.

In order to further encourage any splashing foam to remain in the bag being formed, the nozzle 44 is positioned in a vertical plane defined by the longitudinal dimension of the opening 14 and at an angle within the plane which is non-perpendicular to the substantially horizontal paths of travel. In this arrangement, foamable composition deposited into each bag being formed avoid splashing directly upwardly from the mouth of the bag being formed, but instead is encouraged to splash into the bag as the webs are being advanced.

Figure 1 illustrates a portion of a packaging production line for protectively packaging one or more articles in each of a series of containers 50, one of which is shown, and which includes the above described apparatus 10 for forming foam bags or cushions 38 which are utilized in the packaging. In the embodiment of Figure 1, the production line includes a conveyor 52 which is driven by any suitable motor (not shown), and which serially advances open top containers 50 from a feeding station to a position immediately below the cushion forming apparatus 10. After a cushion 38 is deposited in the container 50, the container may be forwarded to an article loading station, to receive an article A. The article A deforms the cushion 38 into a surrounding and conforming relationship with respect to the lower portion of the article A, and a second cushion 38 from another such apparatus is then dropped into each container upon the articles being packaged. The second cushion is likewise deformed into a surrounding and conforming relationship with the upper portion of the article A during the closing and sealing of the container. Thereafter the foam of both cushions expands to further surround the article, and the foam then hardens. As a result, a supporting and protective, relatively rigid foam cushion is positioned both below and above the articles being packaged, as indicated schematically in Figure 11.

In the drawings and description, preferred embodiments of the invention have been illustrated and described, and although specific terms are employed, they are used in a generic and descriptive sense only and not for purposes of limitation.

## Claims

1. A method of successively forming foam cushions for packaging purposes wherein each cushion comprises a closed plastic bag filled with foam and having a ventilation opening along at least one side edge thereof for escapement of gas generated during foam formation, said method being characterized by the steps of

advancing a pair of webs of plastic film along predetermined paths of travel from respective supply sources, and including guiding the advancing webs into opposing face to face contact at a first heat sealing station, while

heat sealing the opposing longitudinal side edges of the advancing pair of webs to each other at the first heat sealing station to sealingly interconnect the opposing webs along opposite side edges while,

periodically introducing a predetermined amount of foamable composition between the advancing pair of webs of plastic film and so as to be deposited in each bag being formed, while

periodically and momentarily interrupting the heat sealing of the pair of webs to each other along at least one of said side edges during the advancement of the webs through the first heat sealing station so as to form at least one unsealed longitudinal side edge portion which defines at least one side edge opening for each bag, and while

advancing the sealingly interconnected webs to and through a second heat sealing station and transversely heat sealing the webs together upstream of the unsealed side edge portions at the second heat sealing station to form a sealed top edge for each successive bag of foamable composition and including severing each bag from the next succeeding bag while forming a sealed bottom for the next succeeding bag.

2. The method as defined in Claim 1 wherein the step of advancing a pair of webs includes advancing the pair of webs in a generally downward direction and in opposing and converging relationship, and wherein the step of periodically introducing a predetermined amount of foamable composition includes periodically introducing the composition from a discharge location between the converging webs and in close proximity to the point at which the webs initially contact each other.

3. The method as defined in Claim 1 wherein the step of advancing a pair of webs includes advancing the pair of webs in a generally horizontal direction and in opposing and converging relationship, and wherein the step of periodically introducing a predetermined amount of foamable composition includes periodically introducing the composition from a discharge location between the converging webs and in close proximity to the point at which the webs initially contact each other.

4. The method as defined in Claim 2 or Claim 3 wherein the step of advancing a pair of webs further includes passing the webs between drive roll means which define a nip, and wherein said first heat sealing station comprises a pair of heated rolls positioned adjacent said nip and in contact with said advancing webs.

5. A method according to Claim 1, 2, 3 or 4 wherein the step of introducing foamable composition comprises introducing the foamable composition between the webs at a location between the webs which is longitudinally offset from the center of the webs and in a direction towards an off-vertical angle with respect to the face to face contact of the webs at the first heat sealing station whereby foamable composition may be directed into a bag being formed and any of the foamable composition that splashes upon entering the bag will tend to splash within the bag and towards the other side of the bag rather than out of the bag.

6. The method as defined in Claim 4 or 5 wherein the step of periodically and momentarily interrupting the heat sealing of the pair of webs includes effecting lateral displacement of said pair of heated rolls so that they are removed from contact with said advancing webs.

7. The method as defined in Claim 6 wherein the step of transversely heat sealing the webs together includes contacting the webs with a heated wire.

8. The method as defined in Claim 7 comprising the further steps of momentarily terminating the advance of the two webs and laterally displacing said pair of heated rolls from contact with said webs during the step of contacting the webs with a heated wire.

9. An apparatus for successively forming foam cushions for packaging purposes wherein each cushion comprises a closed plastic bag filled with foam and having a ventilation opening along at least one side edge thereof for escapement of gas generated during foam formation, said apparatus being characterized by:

means for advancing two webs of plastic film along predetermined paths of travel from respective supply sources, and for guiding the advancing webs into opposing face to face contact,

first heat sealing means positioned along said path of travel for heat sealing longitudinal side edges of the advancing plastic webs, while they are in opposing face to face contact,

means for periodically introducing a predetermined amount of foamable composition between the opposing webs at a location upstream of the location at which the two webs are guided into opposing face to face contact and so as to be deposited in each bag being formed, and as the webs are being advanced and sealed along said longitudinal side edges,

control means for periodically and momentarily interrupting operation of said first heat sealing means to provide a ventilation opening along at least one side edge of each bag being formed to thereby allow gas generated during foam formation to escape from within each bag, and

second heat sealing means positioned along said path of travel for heat sealing said webs together transversely thereof to form a sealed top edge of a foam filled bag while also forming the sealed bottom edge of the next succeeding bag and for severing each formed bag from the next succeeding bag.

10. The apparatus as defined in Claim 9 wherein said means for advancing and guiding the webs comprises drive roll means defining a nip for receiving the webs therethrough.

11. The apparatus as defined in Claim 10 wherein said first heat sealing means comprises a pair of heated rolls positioned adjacent said nip for engaging respective side edges of the advancing webs as they pass through said nip.

12. The apparatus as defined in Claim 11 wherein said control means comprises a carriage mounting said pair of heated rolls, means mounting said carriage for movement between a first operative position wherein said heated rolls are positioned to engage the advancing webs, and a second position wherein said heated rolls are laterally spaced from the advancing webs, and program controller means for periodically moving said carriage between said first and second positions.

13. The apparatus as defined in Claim 12 wherein said second heating means comprises an electrically heated wire mounted on said carriage, and wherein said means mounting said carriage permits lateral movement to a third position wherein said heated rolls are laterally spaced further from the webs than in said second position and said heated wire is in contact with the webs, and wherein said program controller means acts to periodically move said carriage to said third position such that the heated wire severs the webs and seals the webs together along each side of the line of severance.

14. The apparatus as defined in Claim 13 wherein said drive roll means comprises a first pair of coaxially aligned rollers mounted for rotation about a first horizontal axis on one side of said nip, and a second pair of coaxially aligned rollers mounted for rotation about a second horizontal axis which is parallel to said first axis and on the other side of said nip, and with each of the rollers of each pair being aligned across the nip with a roller of the other pair, and wherein said means for periodically introducing a foamable composition comprises a nozzle located above said nip and medially between the rollers of each pair.

15. The apparatus as defined in Claim 14 wherein said heated rolls are aligned across said nip with respective ones of the rollers of one of the pair of rollers, and such that the aligned rollers serve as back up rollers to the heated rolls in said first position of said carriage.

16. The apparatus as defined in Claim 15 further comprising means mounting at least one of said first and second pairs of rollers and including means for laterally biasing said at least one pair toward the other pair.

17. An apparatus according to Claims 12 , 13, 14, 15 or 16 further comprising a housing having a relatively narrow longitudinal opening therein for receiving the two webs of plastic film from said supply means, said longitudinal opening including means for guiding the webs into said housing while forming a mouth between the webs into which a foamable composition may be directed.

18. An apparatus according to Claim 17 wherein said foamable composition introducing means are positioned in a vertical plane defined by the longitudinal dimension of said opening and at an angle within said plane which is nonperpendicular to said substantially horizontal path of travel so that foamable composition deposited into each bag being formed avoids splashing directly upwardly from the mouth of the bag and instead is encouraged to splash into the bag as the webs are being advanced and sealed along said longitudinal side edges.

19. An apparatus according to Claim 18 wherein said means for guiding the webs into said housing and for forming a mouth between the webs comprises a widened portion of said longitudinal opening through which the webs pass into said housing so that a mouth is formed between the webs as the webs pass over said widened portion of said opening, said widened portion having a parallelogram configuration with the acute angles of the parallelogram lying along the longitudinal dimension of said opening so that as the webs enter said housing they always pass over an edge of said opening which has no less than an obtuse angle, and the webs thereby pass more smoothly over said edges and into said housing.

20. An apparatus according to Claim 19 wherein said foamable composition introducing means and said widened portion of said opening are positioned longitudinally away from the center of said longitudinal opening in a direction towards said nonperpendicular angle, so that the mouth formed by the webs is likewise positioned longitudinally away from the center of said opening whereby foamable composition may be directed into one side of a bag being formed and any of the foamable composition directed from said introducing means that splashes upon entering the bag will tend to splash within the bag and towards the other side of the bag rather than out of the bag.

**Revendications**

1. Procédé de formation successive de coussins de mousse destinés à l'emballage, dans lequel chaque coussin comporte un sac fermé de matière plastique, rempli d'une mousse et ayant une ouverture de ventilation le long d'un bord latéral au moins de manière que le gaz dégagé pendant la formation de la mousse puisse s'échapper, le procédé étant caractérisé par les étapes suivantes :

l'avance d'une paire de feuilles continues de matière plastique le long de trajets prédéterminés de déplacement depuis des réserves respectives, avec guidage des feuilles qui avancent afin qu'elles soient en contact face à face à un premier poste de thermosoudage, avec

thermosoudage l'un à l'autre des bords longitudinaux des côtés opposés de la paire de feuilles qui avancent, au premier poste de thermosoudage, afin que les feuilles opposées soient interconnectées de manière étanche le long de leurs bords opposés, avec

introduction périodique d'une quantité prédéterminée d'une composition génératrice d'une mousse entre les deux feuilles de film de matière plastique qui avancent, de manière que la composition se dépose dans chaque sac en cours de formation, avec

interruption périodique et temporaire du thermosoudage des deux feuilles l'une à l'autre le long de l'un au moins des bords pendant l'avance des feuilles au premier poste de thermosoudage de manière qu'une partie au moins de bord longitudinal non soudée soit formée et délimite au moins une ouverture de bord latéral de chaque sac, et avec

avance des feuilles interconnectées de manière étanche vers un second poste de thermosoudage et dans ce poste, et le thermosoudage transversal des feuilles l'une à l'autre en amont des parties non soudées de bord latéral au second poste de thermosoudage afin qu'un bord supérieur scellé soit formé pour chaque sac successif de composition génératrice de mousse, avec découpe de chaque sac du sac suivant avec formation d'un fond scellé pour le sac suivant.

2. Procédé selon la revendication 1, dans lequel l'étape d'avance des deux feuilles comprend l'avance des deux feuilles en direction générale descendante afin qu'elles soient l'une en face de l'autre et convergent l'une vers l'autre, et l'étape d'introduction périodique d'une quantité prédéterminée de composition génératrice d'une mousse comprend l'introduction périodique de la composition provenant d'un emplacement d'évacuation entre les feuilles qui convergent et très près du point auquel les feuilles sont initialement en contact mutuel.

3. Procédé selon la revendication 1, dans lequel l'étape d'avance des deux feuilles comprend l'avance des deux feuilles en direction générale horizontale, face à face et de manière qu'elles convergent, et l'étape d'introduction périodique d'une quantité prédéterminée de composition génératrice d'une mousse comprend l'introduction périodique de la composition d'un emplacement d'évacuation entre les feuilles qui convergent et très près du point auquel les feuilles sont initialement en contact mutuel.

4. Procédé selon la revendication 2 ou 3, dans lequel l'étape d'avance de deux feuilles comporte en outre la circulation des feuilles entre des rouleaux menants qui délimitent une emprise, et dans lequel le premier poste de thermosoudage comporte deux rouleaux chauffants placés près de l'emprise et au contact des feuilles qui avancent.

5. Procédé selon la revendication 1, 2, 3 ou 4, dans lequel l'étape d'introduction d'une composition génératrice d'une mousse comprend l'introduction de la composition génératrice d'une mousse entre les feuilles à un emplacement compris entre les feuilles et qui est décalé longitudinalement par rapport au centre des feuilles, dans une direction qui se rapproche d'un angle de décalage par rapport à la verticale, par rapport au contact face à face des feuilles au premier poste de thermosoudage, si bien que la composition génératrice d'une mousse peut être dirigée dans un sac en cours de formation et la composition génératrice d'une mousse qui éclabousse lors de l'entrée dans le sac a tendance à éclabousser l'intérieur du sac et l'autre côté du sac plutôt que l'extérieur du sac.

6. Procédé selon la revendication 4 ou 5, dans lequel l'étape d'interruption périodique et temporaire du thermosoudage des deux feuilles comprend le déplacement latéral des deux rouleaux chauffants de manière qu'ils s'écartent du contact des feuilles qui avancent.

7. Procédé selon la revendication 6, dans lequel l'étape de thermosoudage transversal des feuilles l'une à l'autre comprend la mise en contact des feuilles avec un fil métallique chauffé.

8. Procédé selon la revendication 7, comprenant les étapes d'interruption temporaire de l'avance des deux feuilles continues et de déplacement latéral des deux rouleaux chauffants du contact avec les feuilles continues pendant l'étape de mise en contact des feuilles avec un fil métallique chauffant.

9. Appareil de formation successive de coussins de mousse pour l'emballage, dans lequel chaque coussin comprend un sac fermé de matière plastique, rempli d'une mousse et ayant une ouverture de ventilation le long du bord d'au moins un côté de manière que le gaz dégagé pendant la formation de la mousse puisse s'échapper, l'appareil étant caractérisé par :

un dispositif destiné à faire avancer deux feuilles continues de matière plastique le long de trajets prédéterminés de déplacement à partir de réserves, et à guider les feuilles qui avancent afin qu'elles soient en contact face à face,

un premier dispositif de thermosoudage placé le long du trajet de déplacement et destiné à thermosouder des bords longitudinaux des feuilles de matière plastique qui avancent, lorsqu'elles sont en contact face à face,

un dispositif destiné à introduire périodiquement une quantité prédéterminée d'une composition génératrice d'une mousse entre les feuilles opposées à un emplacement qui est en amont de l'emplacement auquel les deux feuilles continues sont guidées en contact face à face et de manière que la composition soit déposée dans chaque sac en cours de formation, lorsque les feuilles avancent et sont soudées le long des bords longitudinaux,

un dispositif de commande destiné à interrompre périodiquement et temporairement le fonctionnement du premier dispositif de thermosoudage afin qu'une ouverture de ventilation soit formée le long du bord d'au moins un côté de chaque sac en cours de formation, et que le gaz dégagé pendant la formation de la mousse puisse s'échapper de l'intérieur du sac, et

un second dispositif de thermosoudage placé le long du trajet de déplacement et destiné à thermosouder les feuilles continues l'une à l'autre transversalement de manière qu'un bord supérieur scellé d'un sac rempli de mousse soit formé alors qu'un bord inférieur scellé du sac suivant est aussi formé et chaque sac formé est séparé du sac suivant.

10. Appareil selon la revendication 9, dans lequel le dispositif destiné à faire avancer et à guider les feuilles continues comprend des rouleaux menants délimitant une emprise destinée à loger les feuilles continues.

11. Appareil selon la revendication 10, dans lequel le premier dispositif de thermosoudage comporte une paire de rouleaux chauffants placés près de l'emprise et destinés à être au contact des bords respectifs des côtés des feuilles qui avancent lorsqu'elles passent dans l'emprise.

12. Appareil selon la revendication 11, dans lequel le dispositif de commande comprend un chariot portant deux rouleaux chauffants, un dispositif de montage du chariot afin qu'il se déplace vers une première position de travail dans laquelle les rouleaux chauffants sont en position de coopération avec les feuilles qui avancent et une seconde position dans laquelle les rouleaux chauffants sont séparés latéralement des feuilles qui avancent, et un organe de commande par programme destiné à déplacer périodiquement le chariot entre la première et la seconde position.

13. Appareil selon la revendication 12, dans lequel le second dispositif de chauffage comprend un fil chauffé électriquement, monté sur le chariot, et dans lequel le dispositif de montage du chariot permet un déplacement latéral vers une troisième position dans laquelle les rouleaux chauffants sont plus espacés latéralement des feuilles que dans la seconde position, et le fil chauffant est au contact des feuilles continues, et dans lequel l'organe de commande par programme provoque un déplacement périodique du chariot vers la troisième position afin que le fil chauffant coupe les feuilles continues et scelle les feuilles continues le long des deux côtés de la ligne de coupe.

14. Appareil selon la revendication 13, dans lequel le dispositif à rouleaux menants comporte une première paire de rouleaux alignés coaxialement, montés afin qu'ils tournent autour d'un premier axe horizontal d'un côté de l'emprise, et une seconde paire de rouleaux alignés coaxialement, montés afin qu'ils tournent autour d'un second axe horizontal qui est parallèle au premier axe et de l'autre côté de l'emprise, les rouleaux des deux paires étant alignés mutuellement de part et d'autre de l'emprise, et le dispositif destiné à introduire périodiquement une composition génératrice d'une mousse comporte une buse placée au-dessus de l'emprise et entre les rouleaux de chaque paire.

15. Appareil selon la revendication 14, dans lequel les rouleaux chauffants sont alignés de part et d'autre de l'emprise sur les rouleaux de l'une des paires de rouleaux, de manière que les rouleaux alignés constituent des rouleaux d'appui pour les rouleaux chauffants, dans la première position du chariot.

16. Appareil selon la revendication 15, comprenant en outre un dispositif de montage de l'une au moins des première et seconde paires de rouleaux et comprenant un dispositif destiné à rappeler latéralement ladite paire au moins vers l'autre paire.

17. Appareil selon la revendication 12, 13, 14, 15 ou 16, comprenant en outre un boîtier ayant une ouverture longitudinale relativement étroite pour le passage des deux feuilles continues du film de matière plastique provenant des réserves, l'ouverture longitudinale comprenant un dispositif de guidage des feuilles dans le boîtier avec formation entre les feuilles d'une embouchure dans laquelle une composition génératrice de mousse peut être dirigée.

18. Appareil selon la revendication 17, dans lequel le dispositif d'introduction d'une composition génératrice d'une mousse est placé dans un plan vertical défini par la longueur de l'ouverture et en direction inclinée par rapport à ce plan qui n'est pas perpendiculaire au trajet sensiblement horizontal de déplacement si bien que la composition génératrice d'une mousse déposée dans chaque sac formé n'éclabousse pas directement vers le haut depuis l'embouchure du sac et au contraire a tendance à éclabousser l'intérieur du sac lorsque les feuilles avancent et sont scellées le long des bords longitudinaux.

19. Appareil selon la revendication 18, dans lequel le dispositif de guidage des feuilles dans le boîtier et de formation d'une embouchure entre les feuilles comprend une partie élargie de l'ouverture longitudinale par laquelle passent les feuilles qui pénètrent dans le boîtier de manière qu'une embouchure soit formée entre les feuilles lorsque celles-ci passent sur la partie élargie de l'ouverture, la partie élargie ayant une configuration de parallélogramme dont les angles aigus sont disposés suivant la longueur de l'ouverture si bien que, lorsque les feuilles continues pénètrent dans le boîtier, elles passent aussi sur un bord de l'ouverture qui a un angle qui n'est pas inférieur à un angle obtus, et les feuilles continues passent ainsi plus régulièrement sur les bords et dans le boîtier.

**20.** Appareil selon la revendication 19, dans lequel le dispositif d'introduction d'une composition génératrice d'une mousse et la partie élargie de l'ouverture sont placés longitudinalement à distance du centre de l'ouverture longitudinale, dans une direction orientée vers l'angle non perpendiculaire, si bien que l'embouchure formée par les feuilles est ainsi positionnée longitudinalement à distance du centre de l'ouverture et que la composition génératrice d'une mousse peut être dirigée d'un côté d'un sac en cours de formation et la composition génératrice de mousse qui est dirigée par le dispositif d'introduction et qui éclabousse l'entrée du sac a tendance à se diriger vers l'intérieur du sac et vers l'autre côté du sac plutôt que vers l'extérieur du sac.

## Patentansprüche

**1.** Verfahren zum sukzessiven Herstellen von Schaumkissen für Verpakkungszwecke, bei dem jedes Kissen einen Beutel aus Kunststoff aufweist, der mit Schaumstoff gefüllt ist und an wenigstens einem seiner Seitenränder eine Entlüftungsöffnung zum Ausströmen von während des Schäumens entstehendem Gas hat, gekennzeichnet durch die Arbeitsschritte:

- Vorwärtsbewegen eines Paares Bahnen aus Kunststoff-Folie in vorbestimmten Bewegungsbahnen ab zugehörigen Vorratsquellen, einschließlich des Führens der sich vorwärtsbewegenden Bahnen in eine Lage, in der sich ihre sich gegenüberliegenden Flächen an einer ersten Heißsiegelstation berühren, dabei

- Verbinden der sich gegenüberliegenden Längsseitenränder des sich vorwärtsbewegenden Paares von Bahnen durch Heißsiegeln an der ersten Heißsiegelstation, derart, daß die sich gegenüberliegenden Bahnen an sich gegenüberliegenden Seitenrändern abdichtend miteinander verbunden werden, dabei

- periodisches Einleiten einer vorbestimmten Menge einer schäumbaren Masse zwischen das sich vorwärtsbewegende Paar Bahnen aus Kunststoff-Folie und in der Weise, daß sie sich in jedem in Bildung befindlichen Beutel absetzt, dabei

- periodisches und kurzzeitiges Unterbrechen der Heißsiegel-Verbindung des Bahnpaares an wenigstens einem der Seitenränder während des Vorwärtsdurchlaufs der Bahnen durch die erste Heißsiegelstation, damit wenigstens ein unverschlossener Abschnitt des Längsseitenrandes entsteht, der wenigstens eine Seitenrandöffnung für jeden Beutel bildet, und dabei

- Vorwärtsbewegen der abdichtend miteinander verbundenen Bahnen in Richtung auf und durch eine zweite Heißsiegelstation und Heißsiegel-Verbinden der Bahnen in Querrichtung in Arbeitsrichtung nach den unverschlossenen Abschnitten des Seitenrandes an der zweiten Heißsiegelstation, derart, daß für jeden aufeinanderfolgenden Beutel mit schäumbarer Masse ein abdichtend verschlossener oberer Rand erzeugt wird, und mit Abtrennen jedes Beutels vom nächsten, darauffolgenden Beutel unter Ausbildung eines abdichtend verschlossenen Bodens für den nächsten, darauffolgenden Beutel.

**2.** Verfahren nach Anspruch 1, bei dem der Arbeitsschritt des Vorwärtsbewegens eines Paares Bahnen das Vorwärtsbewegen des Paares Bahnen in einer im wesentlichen abwärtsweisenden Richtung und bei sich gegenüberliegender Anordnung und aufeinanderzulaufender Bewegung umfaßt, und bei dem der Arbeitsschritt der periodischen Einleitung einer vorbestimmten Menge schäumbarer Masse das periodische Einleiten der Masse ab einer Abgabestelle zwischen den aufeinanderzulaufenden Bahnen und in großer Nähe zu der Stelle umfaßt, an der die Bahnen sich zum ersten Mal berühren.

**3.** Verfahren nach Anspruch 1, bei dem der Arbeitsschritt des Vorwärtsbewegens eines Paares Bahnen das Vorwärtsbewegen des Paares Bahnen in einer im wesentlichen waagerechten Richtung und bei sich gegenüberliegender Anordnung und aufeinanderzulaufender Bewegung umfaßt, und bei dem der Arbeitsschritt der periodischen Einleitung einer vorbestimmten Menge schäumbarer Masse das periodische Einleiten der Masse ab einer Abgabestelle zwischen den aufeinanderzulaufenden Bahnen und in großer Nähe zu der Stelle umfaßt, an der die Bahnen sich zum ersten Mal berühren.

**4.** Verfahren nach Anspruch 2 oder Anspruch 3, bei dem der Arbeitsschritt des Vorwärtsbewegens eines Paares Bahnen ferner das Durchlaufenlassen der Bahnen zwischen einer einen Walzenspalt bildenden Antriebswalzen-Einrichtung umfaßt, und bei dem die erste Heißsiegelstation ein Paar Heizrollen aufweist, die in der Nähe dieses Walzenspaltes und in Berührung mit den sich vorwärtsbewegenden Bahnen angeordnet sind.

5. Verfahren nach einem der Ansprüche 1, 2, 3 oder 4, bei dem der Arbeitsschritt der Einleitung von schäumbarer Masse das Einleiten der schäumbaren Masse zwischen die Bahnen an einer Stelle zwischen den Bahnen, die in Längsrichtung gegenüber der Mitte der Bahnen versetzt ist, und in einer Richtung umfaßt, die sich einem nicht lotrechten Winkel in bezug auf die Flächenberührung der Bahnen an der ersten Heißsiegelstation nähert, derart, daß schäumbare Masse in einen in Ausbildung befindlichen Beutel gerichtet werden kann und Teile der schäumbaren Masse, die beim Eintritt in den Beutel abspritzen, das Bestreben haben, innerhalb des Beutels und gegen die andere Seite des Beutels zu spritzen, statt aus dem Beutel herauszuspritzen.

6. Verfahren nach Anspruch 4 oder 5, bei dem der Arbeitsschritt der periodischen und kurzzeitigen Unterbrechung der Heißsiegel-Verbindung des Bahnenpaares das seitliche Verschieben des Paares Heizrollen umfaßt, derart, daß sie aus der Berührung mit den sich vorwärtsbewegenden Bahnen herausbewegt werden.

7. Verfahren nach Anspruch 6, bei dem der Arbeitsschritt der Heißsiegel-Verbindung der Bahnen in Querrichtung das Berühren der Bahnen mit einem Heizdraht umfaßt.

8. Verfahren nach Anspruch 7, mit dem weiteren Arbeitsschritt der kurzzeitigen Beendigung der Vorwärtsbewegung der beiden Bahnen und der seitlichen Verstellung des Paares Heizrollen aus der Berührung mit den Bahnen heraus während des Arbeitsschrittes der Berührung der Bahnen mit einem Heizdraht.

9. Vorrichtung zum sukzessiven Herstellen von Schaumkissen für Verpackungszwecke, wobei jedes Kissen einen geschlossenen Beutel aus Kunststoff umfaßt, der mit Schaumstoff gefüllt ist und an wenigstens einem seiner Seitenränder eine Entlüftungsöffnung zum Ausströmen von während des Schäumens entstehendem Gas aufweist, gekennzeichnet durch:
  - eine Einrichtung zum Vorwärtsbewegen von zwei Bahnen aus Kunststoff-Folie in vorbestimmten Bewegungsbahnen ab zugehörigen Vorratsquellen und zum Führen der sich vorwärtsbewegenden Bahnen in eine Lage, in der sich ihre sich gegenüberliegenden Flächen berühren,
  - eine an der Bewegungsbahn angeordnete erste Heißsiegel-Einrichtung zum Verbinden durch Heißsiegeln von Längsseitenrändern der sich vorwärtsbewegenden Kunststoff-Bahnen, während sich ihre sich gegenüberliegenden Flächen berühren,
  - eine Einrichtung zur periodischen Einleitung einer vorbestimmten Menge einer schäumbaren Masse zwischen die sich gegenüberliegenden Bahnen an einer Stelle, die in Arbeitsrichtung vor der Stelle gelegen ist, zu der die beiden Bahnen zur Berührung ihrer sich gegenüberliegenden Flächen geführt werden, und in der Weise, daß sie sich in jedem in Ausbildung befindlichen Beutel absetzt, während sich die Bahnen vorwärtsbewegen und an den Längsseitenrändern abdichtend verschlossen werden,
  - eine Steuereinrichtung zur periodischen und kurzzeitigen Unterbrechung des Betriebs der ersten Heißsiegel-Einrichtung, derart, daß an wenigstens einem Seitenrand jedes in Ausbildung befindlichen Beutels eine Entlüftungsöffnung herstellbar ist, um dadurch das Ausströmen von beim Schäumen entstehendem Gas aus jedem Beutel zu ermöglichen, und
  - eine an der Bewegungsbahn angeordnete zweite Heißsiegel-Einrichtung zum Verbinden durch Heißsiegeln der Bahnen in ihrer Querrichtung, derart, daß ein abdichtend verschlossener oberer Rand eines mit Schaum gefüllten Beutels herstellbar ist, während auch der abdichtend verschlossene Bodenrand des nächsten, nachfolgenden Beutels ausgebildet wird, und zum Abtrennen jedes ausgebildeten Beutels vom nächsten, nachfolgenden Beutel.

10. Vorrichtung nach Anspruch 9, bei der die Einrichtung zum Vorwärtsbewegen und Führen der Bahnen eine Antriebswalzen-Einrichtung umfaßt, die einen Walzenspalt zum Einziehen der Bahnen bildet.

11. Vorrichtung nach Anspruch 10, bei der die erste Heißsiegel-Einrichtung ein nahe dem Walzenspalt angeordnetes Paar Heizrollen zum Anlegen an zugehörige Seitenränder der sich vorwärtsbewegenden Bahnen beim Durchlauf durch den Walzenspalt aufweist.

12. Vorrichtung nach Anspruch 11, bei der die Steuereinrichtung einen Schlitten zur Aufnahme des Paares Heizrollen umfaßt, eine Einrichtung zur Aufnahme des Schlittens mit Verstellbarkeit zwischen einer ersten Arbeitsstellung, in welcher die Heizrollen so angeordnet sind, daß sie an den sich vorwärtsbewegenden Bahnen anliegen, und einer zweiten Stellung, in der die Heizrollen seitlichen Abstand von den sich vorwärtsbewegenden Bahnen haben, und eine Programm-Steuereinrichtung zum periodischen Bewegen des Schlittens zwischen der ersten und der zweiten Stellung.

13. Vorrichtung nach Anspruch 12, bei der die zweite Heizeinrichtung einen auf dem Schlitten angeordneten elektrisch beheizten Draht aufweist, und bei der die Einrichtung zur Aufnahme des Schlittens eine seitliche Bewegung in eine dritte Stellung ermöglicht, in der die Heizrollen größeren seitlichen Abstand von den Bahnen haben als in der zweiten Stellung und der Heizdraht die Bahnen berührt, und bei der die Programm-Steuereinrichtung in der Weise funktioniert, daß sie den Schlitten periodisch in die dritte Stellung so bewegt, daß der Heizdraht die Bahnen durchtrennt und die Bahnen beiderseits der Trennlinie abdichtend miteinander verbindet.

14. Vorrichtung nach Anspruch 13, bei der die Antriebswalzen-Einrichtung ein erstes Paar um eine erste waagerechte Achse auf einer Seite des Walzenspalts drehbare, gleichachsig ausgerichtete Walzen und ein zweites Paar um eine zur ersten Achse parallele und auf der anderen Seite des Walzenspaltes angeordnete zweite waagerechte Achse drehbare, gleichachsig ausgerichtete Walzen aufweist, wobei jede Walze jedes Paares in Deckungsstellung mit einer Walze des anderen Paares auf der anderen Seite des Walzenspaltes angeordnet ist, und bei der die Einrichtung zur periodischen Einleitung einer schäumbaren Masse eine oberhalb des Walzenspaltes und in der Mitte zwischen den Walzen jedes Paares angeordnete Düse umfaßt.

15. Vorrichtung nach Anspruch 14, bei der die Heizrollen in Deckungsstellung mit zugehörigen Walzen eines der Walzenpaare auf der anderen Walzenspaltseite und in der Weise angeordnet sind, daß die zu ihnen ausgerichteten Walzen als Gegenwalzen zu den Heizrollen in der ersten Stellung des Schlittens dienen.

16. Vorrichtung nach Anspruch 15, ferner mit einer Einrichtung zur Aufnahme wenigstens eines Paares vom ersten und zweiten Walzen-Paar und aufweisend eine Einrichtung zum Vorspannen des wenigstens einen Paares in seitlicher Richtung zum anderen Paar hin.

17. Vorrichtung nach den Ansprüchen 12, 13, 14, 15 oder 16, ferner mit einem Gehäuse mit einer relativ schmalen längsgerichteten Öffnung darin zur Aufnahme der beiden Bahnen aus Kunststoff-Folie von der Vorratseinrichtung, wobei die längsgerichtete Öffnung eine Einrichtung zum Einführen der Bahnen in das Gehäuse unter Ausbildung eines Einfülloches zwischen den Bahnen aufweist, in das eine schäumbare Masse lenkbar ist.

18. Vorrichtung nach Anspruch 17, bei der die Einrichtungen zur Einleitung einer schäumbaren Masse in einer durch die Längsabmessung der Öffnung begrenzten senkrechten Ebene und in dieser Ebene unter einem Winkel angeordnet sind, der kein rechter Winkel auf die im wesentlichen waagerechte Bewegungsbahn ist, so daß eine schäumbare Masse, die in jeden in Ausbildung befindlichen Beutel eingefüllt wird, ein Abspritzen vom Einfülloch des Beutels direkt nach oben vermeidet und stattdessen unterstützt wird, in den Beutel hineinzuspritzen, während die Bahnen vorwärtsbewegt und an ihren Längsseitenrändern abdichtend verbunden werden.

19. Vorrichtung nach Anspruch 18, bei der die Einrichtung zum Führen der Bahnen in das Gehäuse und Ausbilden eines Einfülloches zwischen den Bahnen einen erweiterten Abschnitt der längsgerichteten Öffnung umfaßt, durch welche die Bahnen in das Gehäuse einlaufen, so daß ein Einfülloch zwischen den Bahnen ausgebildet wird, wenn die Bahnen über den erweiterten Abschnitt der Öffnung laufen, wobei der erweiterte Abschnitt die Gestalt eines Parallelogramms hat, dessen spitze Winkel in der Längsabmessung der Öffnung liegen, so daß die Bahnen beim Einlaufen in das Gehäuse stets über einen Rand der Öffnung laufen, der nichts anderes als einen stumpfen Winkel aufweist, und die Bahnen dadurch gleichmäßiger über diese Ränder hinweg und in das Gehäuse hinein laufen.

20. Vorrichtung nach Anspruch 19, bei der die Einrichtung zur Einleitung einer schäumbaren Masse und der erweiterte Abschnitt der Öffnung in Längsrichtung von der Mitte der längsgerichteten Öffnung zu dem nicht rechten Winkel hin weggerückt sind, so daß das von den Bahnen gebildete Einfülloch in ähnlicher Weise in Längsrichtung von der Mitte der Öffnung weggerückt ist, derart, daß schäumbare Masse auf eine Seite eines in Ausbildung befindlichen Beutels gelenkt werden kann und von der Einspritzeinrichtung abgegebene Teile der schäumbaren Masse, die beim Eintritt in den Beutel aufspritzen, das Bestreben haben, innerhalb des Beutels und gegen die andere Beutelseite zu spritzen, statt aus dem Beutel herauszuspritzen.

_Fig-1_

$$\underline{\mathit{Fig}\text{-}2}$$

_Fig-3_

_Fig-4_

_Fig-5_

Fig-6

Fig-7

Fig-8

Fig-9

Fig-10

Fig-11

_Fig=12_

Fig-13